# EUROPEAN PATENT APPLICATION

(11) **EP 1 621 965 A1**
(43) Date of publication of application: **01.02.2006**
(21) Application number: 04017557.2
(22) Date of filing: 23.07.2004
(51) Int. Cl.: G06F 1/16, G03B 29/00

(54) **Tablet PC with digital camera**

(71) Applicant: VAC Corporation, Taipei (TW)
(72) Inventor: Lee, Chieh-Yin, Taipei (TW)
(74) Representative: Viering, Jentschura & Partner

(57) **Abstract**

A tablet PC and digital camera arrangement is described as having a tablet PC, a bracket formed integral with the housing of the tablet PC, two coupling plates respectively coupled to two upright supports of the bracket, a digital camera pivotally connected between the coupling plates at the bracket and electrically connected to the internal circuit of the tablet PC through a signal line, and two ornamental end caps fastened to the housing of the table PC around the two distal ends of the digital camera to kept the coupling plates and the bracket from sight.

## Description

### BACKGROUND OF THE INVENTION

### 1. Field of the Invention

The present invention relates generally to a tablet PC and more specifically to a tablet PC, which has a digital camera built in the housing thereof.

### 2. Description of the Related Art

A tablet PC is mobile compact personal computer convenient for carrying with the user. It combines a handwriting input system with a windows platform PC. Through the smart handwriting input system, a tablet PC is convenient for taking notes, recording something for further use, drawing pictures, etc., and the handwritings or pictures thus made can be stored as digital data.

Further, digital cameras have been intensively used as a substitute for conventional cameras due to their advantage of storing image data in a memory instead of the use of film. When the memory capacity in the camera is fully occupied, the storage data can be transmitted to a computer for image editing or printing.

The working principle of a digital camera is similar to conventional cameras with the exception of the use of an electronic image sensor and a memory as a substitute for film. The electronic image sensor picks up an image and converts the image into digital data for storing in the memory.

Some digital cameras can only take still photos. Other digital cameras can pick up motion pictures and record voices.

Following the fast development of information technology, computerization equipment has been gradually entering every company and family, and people have many chances for contact with computer peripheral apparatus. Nowadays, tablet PCs and digital cameras have become important peripheral apparatus in many companies and families. However, a tablet PC and a digital camera are two independent electronic devices. A tablet PC and a digital camera require a lot of storage space. Further, when using a digital camera with a tablet PC, a cable is necessary to transmit data from the digital camera to the tablet PC.

Therefore, it is desirable to provide a tablet PC and digital camera arrangement that eliminates the aforesaid drawbacks.

### SUMMARY OF THE INVENTION

The present invention has been accomplished under the circumstances in view. It is the main object of the present invention to provide a tablet PC with a digital camera built therein to save installation space. It is another object of the present invention to provide a tablet PC with a digital camera built therein for convenient use. It is still another object of the present invention to provide a tablet PC and a digital camera arrangement, which enables the digital camera to work with the tablet PC for quick image file access. To achieve these and other objects of the present invention, the tablet PC and digital camera arrangement comprises a tablet PC, and a digital camera pivotally fastened to the housing of the tablet PC and electrically connected to the internal circuit of the tablet PC.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:

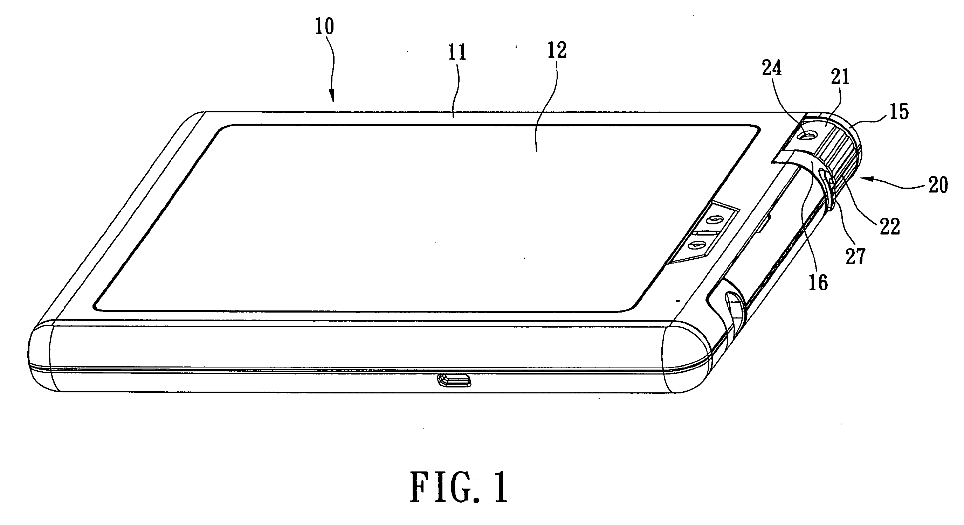

FIG. 1 illustrates the outer appearance of the preferred embodiment of the present invention;

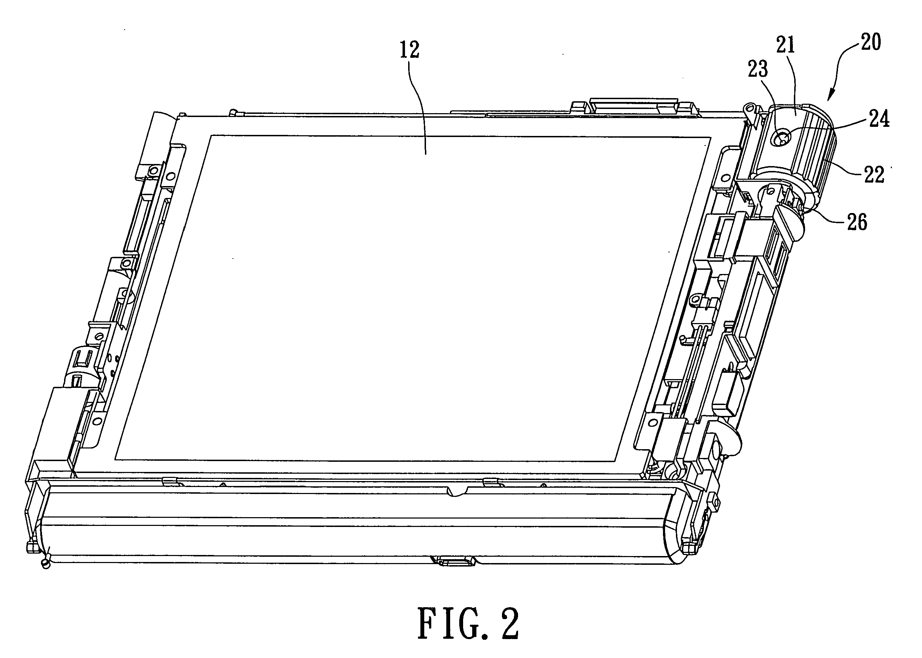

FIG. 2 is a perspective view showing the internal structure of the preferred embodiment of the present invention;

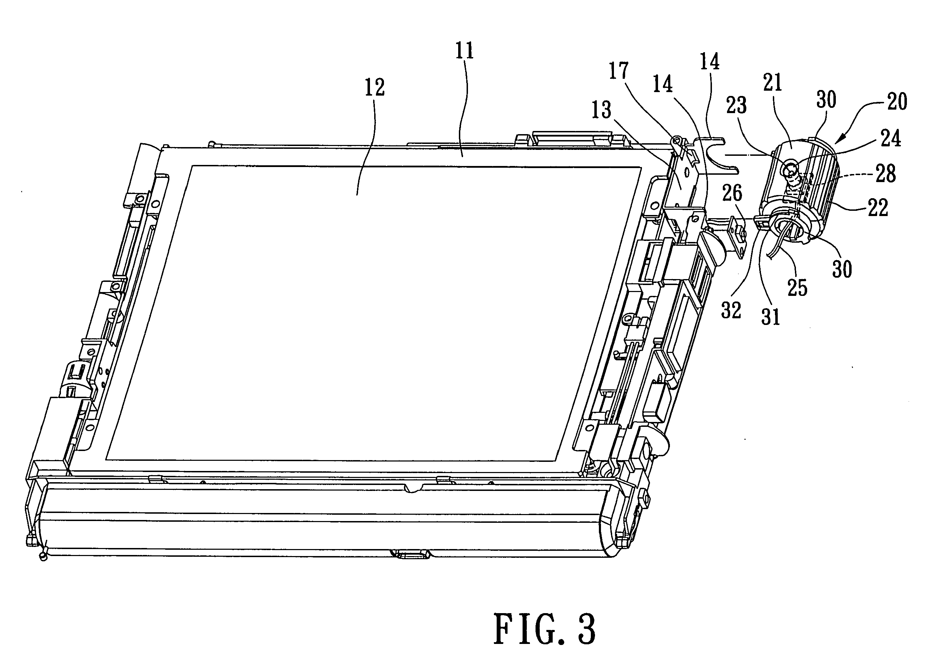

FIG. 3 is an exploded view of the preferred embodiment of the present invention; and

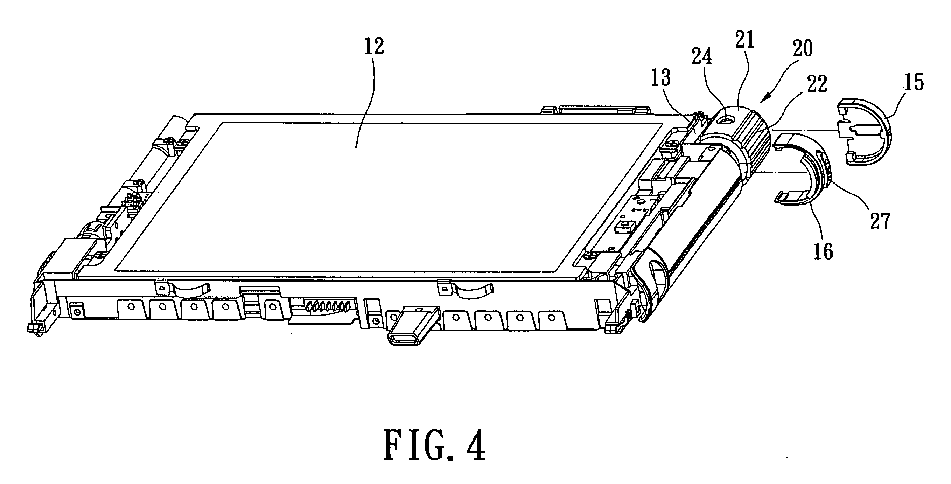

FIG. 4 is another exploded view of the preferred embodiment of the present invention.

### DETAILED DESCRIPTION OF THE INVENTION

Referring to FIG.S. 1-4, a tablet PC **10** is shown comprising a flat rectangular housing **11,** a liquid crystal display panel **12** at the front side of the housing **11,** and other devices including a battery pack, a data storage device (for example, hard disk drive), and a motherboard mounted inside the housing **11.** The motherboard has installed therein a CPU, memories, chip sets, interface cards, etc. This structure of tablet PC **10** is substantially similar to that of conventional tablet PCs.

The main feature of the present invention is the arrangement of a digital camera **20** on the housing **11** of the tablet PC **10.** The digital camera **20** comprises a hollow cylindrical casing **21.** The casing **21** has embossed lines **22** on the periphery for positive positioning of the fingers to bias the digital camera **20** relative to the housing **11** of the tablet PC **10** when adjusting the shooting angle of the digital camera **20.** The casing **21** of the digital camera **20** is not limited to the hollow cylindrical design. It may be made in any of a variety of shapes.

The digital camera **20** comprises a lens **23** mounted inside the casing **21,** a through hole **24** formed in the casing **21** in line with the lens **23,** an electronic image sensor **28** mounted inside the casing **21** behind the lens **23** and adapted to convert image signal obtained through the lens **23** into electric signal, a signal line **25** extended from the image sensor **28** to the internal circuit of the tablet PC **10** for transmitting signal from the image sensor **28** to the tablet PC **10,** and a shutter **26** provided at one side of the housing **11** of the tablet PC **10** and electrically connected to the signal line **25.** The image sensor **28** can be a CCD (charge coupled device) type image sensor or CMOS (complementary metal-oxide semiconductor) type image sensor.

The housing **11** of the tablet PC **10** comprises a bracket **13.** The bracket **13** has two upright supports **14** arranged in parallel at two sides, and two retaining holes **17** respectively disposed adjacent to the upright supports **14.** Two coupling plates **30** are fastened to the upright supports **14** of the bracket **13** to hold the digital camera **20.** The digital camera **20** is pivotally connected between the coupling plates **30.** The coupling plates **30** each have a coupling hole **31** respectively coupled to the upright supports **14,** and a retaining flange **32** respectively fastened to the retaining holes **17** to firmly secure the coupling plates **30** to the bracket **13.** By means of the coupling plates **30,** the digital camera **20** is rotatably disposed at one side of the housing **11** of the tablet PC **20.**

Further, an ornamental top end cap **15** and an ornamental bottom end cap **16** are respectively fastened to the housing **11** of the tablet PC **10** around the two distal ends of the casing **21** of the digital camera **20** and cover the upright supports **14.** A shutter switch control button **27** is provided at the bottom end cap **16** corresponding to the shutter switch **26.** Pressing the shutter switch control button **27** causes the shutter switch control button **27** to trigger the shutter switch **26.**

As indicated above, the invention has the digital camera **20** directly built in the housing **11** of the tablet PC **10.** Because the digital camera **20** is directly built in the housing **11** of the tablet PC **10,** it is not necessary to install an external signal line and a connector for signal transmission from the digital camera **20** to the tablet PC **10.** This compact design does not occupy much storage space. Further, image signals obtained from the digital camera **20** can be stored in memory means inside the tablet PC **10.**

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A tablet PC and digital camera arrangement comprising a tablet PC, comprising a housing, and a digital camera built in the housing of said digital camera.

2. The tablet PC and digital camera arrangement as claimed in claim 1, wherein said digital camera comprises a casing, a lens mounted inside said casing, a through hole formed in said casing in line with said lens, an electronic image sensor mounted inside said casing behind said lens and adapted to convert image signal obtained through said lens into electric signal, and a signal line extended from said image sensor to an internal circuit of said tablet PC for transmitting signal from said image sensor to said tablet PC.

3. The tablet PC and digital camera arrangement as claimed in claim 2, wherein said digital camera further comprises a shutter switch provided at one side of said housing of said tablet PC and electrically connected to said signal line.

4. The tablet PC and digital camera arrangement as claimed in claim 3, wherein said digital camera further comprises an ornamental top end cap and an ornamental bottom end cap respectively fastened to the housing of said tablet PC around two distal ends of said casing, and a shutter switch control button provided on said ornamental bottom end cap for operation by the user to trigger said shutter switch.

5. The tablet PC and digital camera arrangement as claimed in claim 1, wherein said digital camera is fastened pivotally to the housing of said tablet PC.

6. The tablet PC and digital camera arrangement as claimed in claim 5, wherein said tablet PC comprises a bracket, said bracket comprises two upright supports and two retaining holes respectively disposed adjacent to said upright supports, and two coupling plates supporting said digital camera on said upright supports, said coupling plates each comprising a coupling hole respectively coupled to said upright supports and a retaining flange respectively fastened to said retaining holes, and wherein said digital camera is pivotally connected between said coupling plates.
